# EUROPEAN PATENT SPECIFICATION

(11) **EP 2 052 877 B1**
(45) Date of publication and mention of the grant of the patent: **23.05.2012**
(21) Application number: 08251829.1
(22) Date of filing: 27.05.2008
(51) Int. Cl.: B60B 27/00

(54) **Wheel hub stress reduction system**
Spannungsreduzierungssystem für Radnaben
Système de réduction de contrainte de moyeu de roue

(30) Priority: 16.10.2007 US 907726
(43) Date of publication of application: 29.04.2009
(73) Proprietor: Consolidated Metco, Inc., Vancouver, WA 98661 (US)
(72) Inventor: Orey, Gary L., Portland, Oregon 97203 (US); Brasch, Mark R., Portland, Oregon 97229 (US)
(74) Representative: Ramsay, Laura Anne

(56) References cited:
- EP-A- 1 500 524
- WO-A-2007/076773
- JP-A- 2004 052 787
- JP-A- 2004 345 517
- US-A- 6 149 244

## Description

### Field of the Invention

The present invention relates generally to a wheel hub stress reduction system which retains wheels on vehicles, such as semis or tractor-trailer trucks, and more particularly to a system employing a contoured connector which mates with a contoured hole defined by a vehicle hub, and to a method of reducing stress on a wheel hub, according to the preamble of claim 1, 9.

### Background

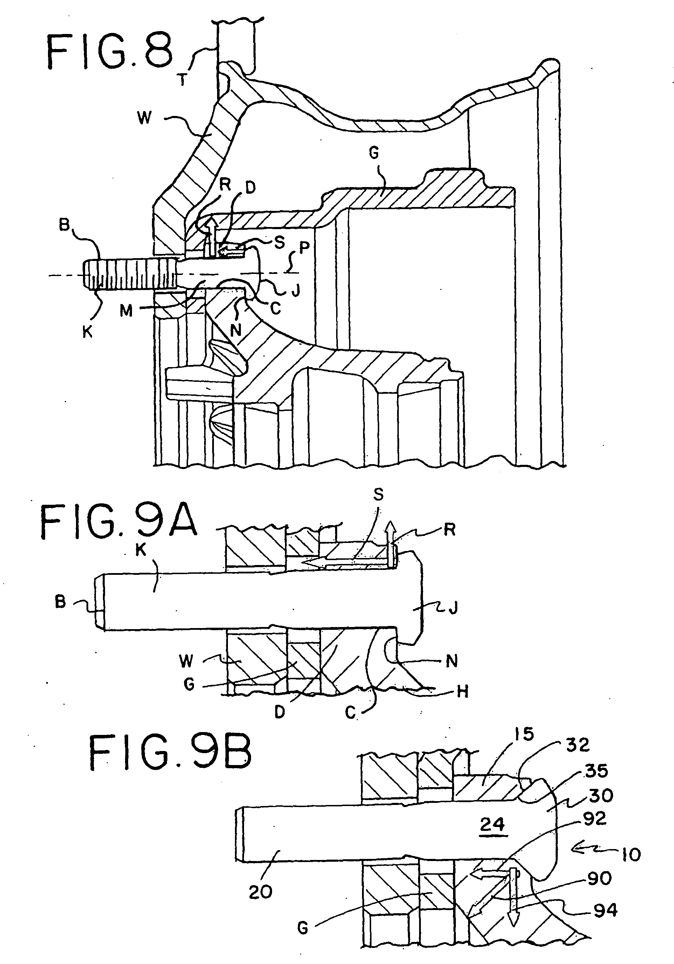

Conventionally, wheel hubs are formed of cast iron or aluminum, which are machined and assembled to mate with other components of a vehicle. For example, FIG. 8 is a sectional view of a radial portion of a generally bell-shaped wheel hub H attached in a conventional manner to a vehicle axle (not shown). A connector, such as a stud or bolt B extends through a bored cylindrical hole C defined by a mounting flange D of hub H extending from an interior surface E to an exterior surface F. While only a single bolt B is shown for simplicity, typically a plurality of holes C are equally spaced around the periphery of the hub mounting flange D, each receiving a bolt B, with the number and size of bolts and the bolt pitch circle diameter, depending upon the load rating of the vehicle. EP - 1 500 524-A2 provides an example of a conventional wheel support bearing assembly.

The bolts B are used to secure together the hub H, sometimes a brake drum G, and a wheel W upon which is mounted a tire T. The bolts B each have a head J at one end, and a threaded portion K at the opposite end. A wheel nut L engages the bolt threaded portion K to secure the wheel W to the hub H. The bolt B has a serrated shoulder portion M which is typically press-fit into cylindrical hole C to affix the bolt to hub H. The bolt head J has undersurface N, which is substantially perpendicular to a longitudinal axis P of bolt B, and is seated substantially flat against the hub interior surface E.

When mounting wheel W to hub H, wheel nut L is tightened onto the bolt B, which .imparts a tensile stress to the hub H in a direction perpendicular to axis P, and a compressive stress perpendicular to undersurface N. The tensile stress commonly occurs in a most critical region of the hub H, along a curved transition between mounting flange D and the barrel portion of hub H at a location radially inward from where material has been removed to form the holes C. The tensile stress may be represented in vector format as a arrow R having a force directed as indicated by the direction of the arrow, and a magnitude represented by the length of the arrow. This tensile stress is imparted to the hub H by the undersurface N of the bolt head J. A compressive stress is imparted by surface N, indicated by arrow S.

A vehicle hub H is typically subjected to two types of stress which limit service life: (1) the mean tensile stress imparted by tightening the wheel nuts, which has the effect of drawing the hub interior surface E down into hole C; (2) fatigue stress caused by a cyclic load generated when the hub rotates under load such as by cornering on turns. The residual tensile stress, when added to the cyclic stresses, has a negative impact on the service life of the hub H. Additionally, it is quite common for mechanics to over-tighten the wheel nuts L when changing tires, resulting in over-stretching or over-tensioning the bolts B and further increasing the tensile stress, which shortens the service life of the hub H.

The generic document JP 2004-052 787 discloses a disk rotor mounting wherein a through hole and the head of a bolt pressed into the through hole are provided with tapered faces.

One aspect of the present invention is directed to a wheel hub stress reduction system for retaining a wheel on a vehicle using wheel nuts as defined by claim 1. The system includes a hub moon having a mounting portion defining a plurality of holes, and a plurality of threaded connectors each received by one of the holes. A maximum tensile stress region is produced in the hub when said connector is tensioned by a wheel nut threadably engaged therewith. The maximum tensile stress region lies beyond a hub radius which bisects said one of the holes. Another aspect of the present invention is directed to a method of reducing stress on a wheel hub retaining a wheel on a vehicle using wheel nuts as defined by claim 11.

Preferably each of the plurality of holes has a first circumference; each hub seating surface has a second circumference greater than said first circumference; and each head contact surface has a third circumference sized for a contact fit with said second circumference of said associated hub seating surface when tightened by said wheel nut.

Preferably each of the plurality holes has a first circumference; each hub seating surface has a second circumference at the hub interior surface which is greater than said first circumference, with the seating surface gradually tapering in circumference between said first and second circumferences; and each head contact surface gradually tapers in circumference for a contact fit with said associated tapering hub seating surface when tightened by said wheel nut.

Preferably each of the plurality of holes has a first circumference; each hub seating surface has a second circumference greater than said first circumference; and each spacer member contact surface has a third circumference sized for a contact fit with said second circumference of said associated hub seating surface when tightened by said wheel nut.

Preferably each of the plurality of holes has a first circumference; each hub seating surface has a second circumference at the hub interior surface which is greater than said first circumference, with the seating surface gradually tapering in circumference between said first and second circumferences; and each spacer member contact surface gradually tapers in circumference for a contact fit with said associated tapering hub seating surface when tightened by said wheel nut.

Each connector comprises an elongate shank having a threaded portion at one end and a head at an opposing end thereof, and a spacer member adjacent an undersurface of the head, wherein said contact surface comprises an exterior surface of the spacer member, said exterior surface having a contour; the forming step comprises forming said contoured seating surface to mate with the spacer member contoured contact surface; and said tensioning comprises tightening the wheel nut on the threaded portion of an associated connector and mating together the spacer member contoured contact surface and the hub contoured seating surface.

Preferably said securing comprises serrating the shoulder portion to secure the spacer member on the shank.

Preferably the method further comprises press-fitting the shoulder portion of each shank into said associated hole in the hub mounting portion.

Preferably each hole has a first circumference; each associated head seat has a second circumference greater than the first circumference; and each head contact surface has a third circumference selected to mate with the head seat at the second circumference.

Preferably each head seat tapers in circumference between the first and second circumferences; and each head surface comprises a tapered contact surface.

Preferably each head seat has an exposed surface which projects beyond said hub interior surface.

### Brief Description of the Drawings

FIG. 1 is a perspective view of a wheel hub stress reduction system according to one embodiment of the invention.
FIG. 2 is an enlarged sectional view of a radial portion of the stress reduction system of FIG. 1.
FIG. 3 is a side elevational view of the connector of FIG. 1.
FIG. 4 is a side elevational view of an embodiment of a connector according to the present invention.
FIG. 5 is an enlarged sectional view of a radial portion of a wheel hub stress reduction system according to an embodiment of the invention using the connector of FIG. 4.
FIG. 6 is a perspective stress diagram showing the tensile stress imparted to the hub when using the wheel hub stress reduction system of FIG. 1 or FIG. 5.
FIG. 7 is a perspective stress reduction diagram showing the tensile stress imparted to the hub when using a prior art hub and bolting system.
FIG. 8 is an enlarged radial, sectional view of a prior art hub and bolting system which produces the tensile stress illustrated in FIG. 7.
FIGS. 9A and 9B are enlarge sectional views each having a vector diagram, with FIG. 9A illustrating the prior art system of FIGS. 7 and 8, and FIG. 9B illustrating the system of FIGS. 1-3.

### Detailed Description

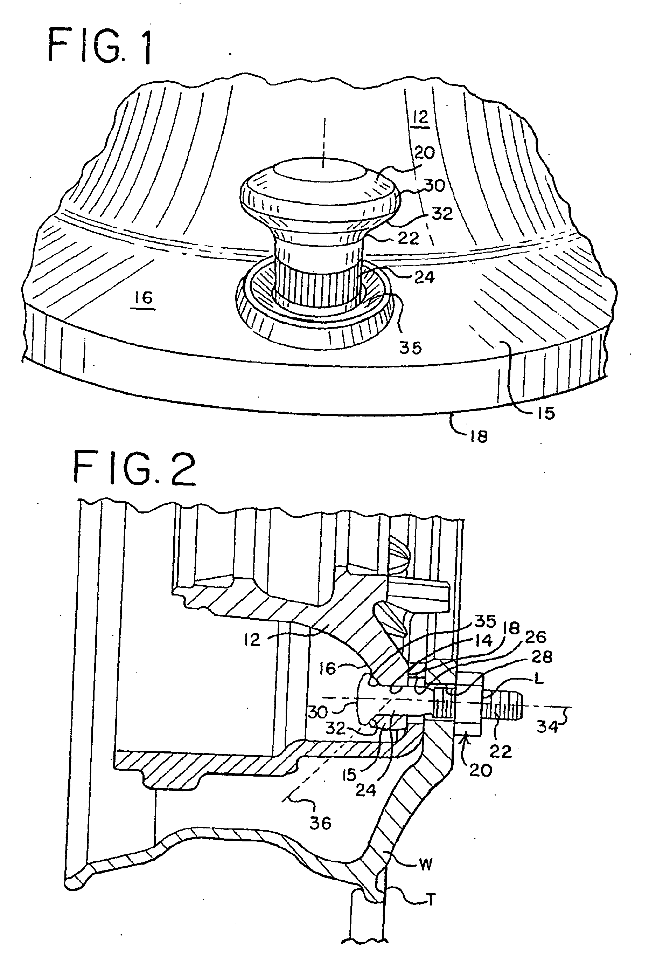

FIGS. 1 through 3 illustrate a wheel hub stress reduction system 10 provided for reference purposes only. As best shown in FIG. 2, system 10 includes a roughly bell-shaped wheel hub 12 having a barrel portion which attaches to an axle by bearings (not shown). A cylindrical hole 14, which may be formed by a boring operation, is defined by an outer peripheral mounting flange 15 of the hub 12. The hole 14 extends from an interior surface 16 to an exterior surface 18 of hub mounting flange 15.

A wheel bolt 20 is illustrated with the shank 22 having a serrated shoulder 24 at one end, and a threaded portion 25 at an opposing end. The serrated shoulder 24 may be press fit into a cylindrical hole 14 of the hub mounting flange 15. The bolt shank 22 extends through a hole 26 defined by the brake drum G and a hole 28 defined by wheel W. A wheel nut L threadably engages the bolt threaded portion 25 to mount the tire T on hub 12. The bolt 20 has a head 30 with an undersurface 32 serving as a contact surface which has a contour centered about a longitudinal axis. 34 of the bolt. Typically a plurality of holes 14 are equally spaced around the periphery of the hub mounting flange 15, each receiving a bolt 20, with the number of bolts depending upon the load rating of the vehicle.

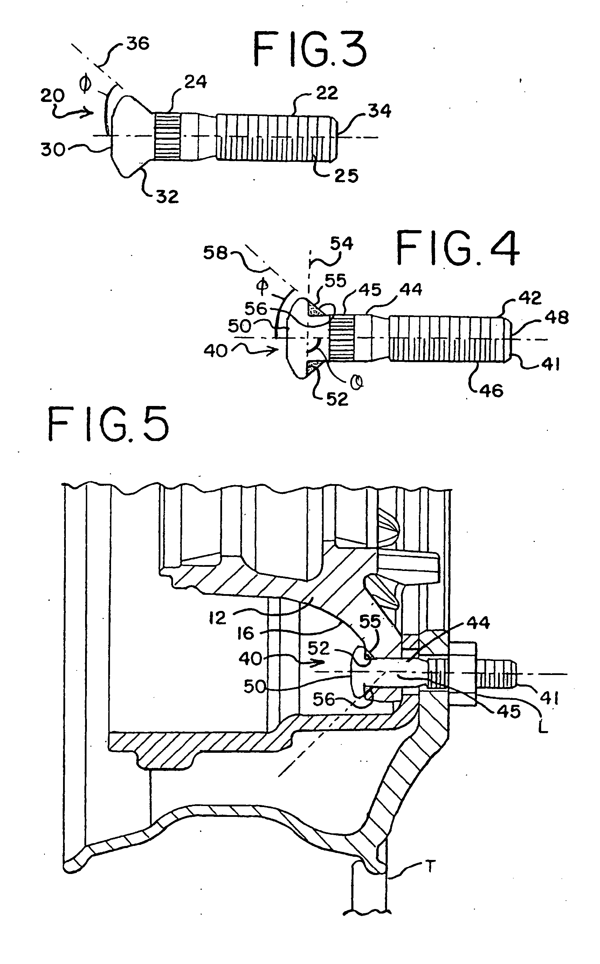

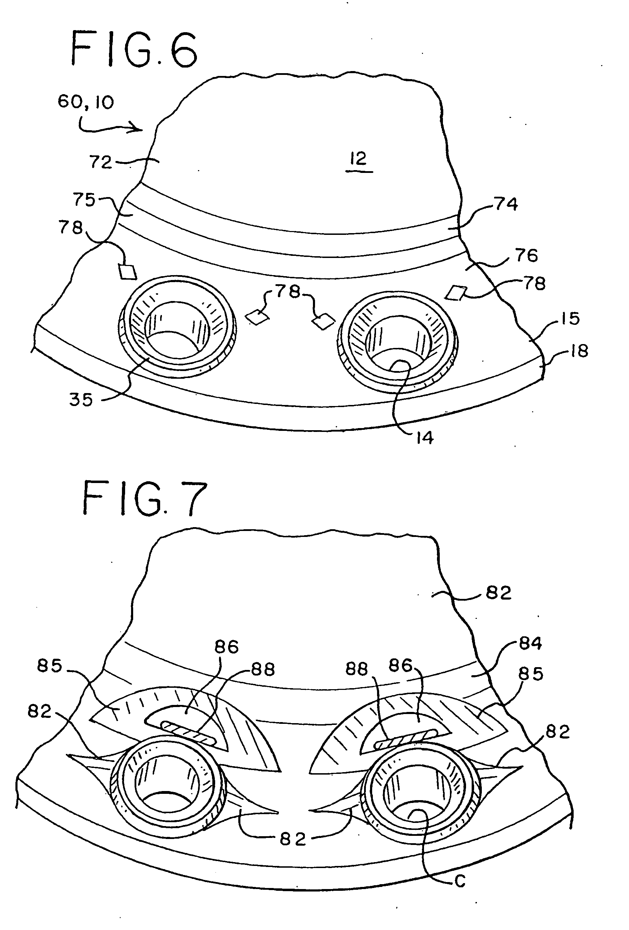

The hub mounting flange 15 defines a head seat 35 having a diameter greater than the cylindrical hole 14. The illustrated seat 35 has a contour which mates the bolt head undersurface 32, here shown as mating tapered or frusto-conical (also known as a "frustum" or "frustrum") shapes. As best shown in FIG. 3, the bolt head undersurface 32 has an angle φ ("phi") with respect to the bolt longitudinal axis 34, as indicated between the dashed lines 34 and 36, with dashed line 36 indicating a slope angle of the head undersurface 32 and head seat 35. In the drawings, this slope angle labeled φ ("phi") is about 45°, although any angle selected in the range of 20° to 80° may be used. The effect on performance of using the illustrated tapered head 32 and tapered seat 35 is discussed below with respect to FIG. 6.

FIGS. 4 and 5 illustrate an embodiment of a connector 40 according to the present invention. As best shown in FIG. 4, the connector 40 includes a hub bolt or bolt 41 having a shank 42. The shank 42 has a non threaded portion 44 at one end which may be optionally serrated to carry a plurality of serrations 45, and a threaded portion 46 at the opposing end. The bolt 41 has a longitudinal axis 48 upon which is centered a head 50 having an undersurface 52. In the drawings, the bolt head undersurface 52 has an angle θ ("theta") with respect to the longitudinal axis 48, as indicated between dashed lines 48 and 54, with the dashed line 54 being coplanar with undersurface 52. In the illustrated embodiment, angle θ is about 90° so the head undersurface 52 is substantially perpendicular to the longitudinal axis 48, as is illustrated for the prior art bolt B of FIG. 8 discussed in the Background section above.

The connector 40 includes a spacer member or washer 55 preferably sized to seat against the entire undersurface 52 of bolt head 50. The washer 55 has a triangular cross-section, illustrated as a right triangle to fit adjacent the mutually perpendicular interface of the head undersurface 52 and the periphery of shoulder 44. A remaining exposed surface 56 of washer 55 serves as a contact surface for connector 40. The contact surface 56 is selected to be at angle Φ ("phi") with respect to the longitudinal axis 48, as indicated in FIG. 4 between dashed lines 48 and 58. The angle Φ may be selected as described above with respect to bolt 20 of FIGS. 1-3, allowing connector 40, comprising bolt 41 and washer 55, to be substituted for bolt 20.

The connector 40 may be constructed in a variety of different ways. For example, bolt 41 may be formed by cold heading or otherwise forming shoulder 44 and head 50 preferably from a steel material. The spacer member or washer 55 may be formed from a steel material in a stamping operation or other forming operation. Preferably, the bolt 41 is formed by cold heading and washer 55 is formed by stamping.

Following these initial forming operations, the washer 55 is mounted on the bolt shank 42 and seated against the head undersurface 52. The washer 55 may be held in place in a variety of different ways, yielding what is known as a captured washer. For example, after washer 55 is installed on shank 41, the serrations 45 may be formed on shoulder 44. The ridges of serrations 45 provide shank 41 with an outer diameter which is greater than the outer diameter of shoulder 44, and greater than the inner diameter of washer 55 to secure the washer to bolt 41. The threads 46 may be formed on shank 41 either before, after, or during formation of the serrations 45. As another example, the washer 55 may be compressed or pre-loaded to secure the washer against the head undersurface 52. In this example, serrations 45 and threads 46 may be formed either before or after washer 55 is installed on bolt 41.

FIG. 5 illustrates an embodiment of a wheel hub stress reduction system 60 according to the present invention employing a connector 40. Here, the connector 40 is substituted for bolt 20 to couple together hub 12, brake housing G, and wheel W, using wheel nut L to mount a tire T on a vehicle. The interface surface 56 of washer 55 rests against the tapered head seat 35. Using washer 55 in connector 40 which moves or floats on a shank shoulder 44, which allows connector 40 to compensate for nonconcentricities of either the bolt head 50 or the cylindrical hub hole 14. The captured washer 55 promotes full contact of the seating surfaces 52 and 55 at all times during tightening of the wheel nut L.

As way of one example, FIGS. 6 and 7 are stress diagrams comparing the tensile stress imparted to a wheel hub 15 using either wheel hub stress reduction system 10 or 60 (FIG. 6), with the tensile stress imparted to a wheel hub H using the prior art system discussed in the Background Section (FIG. 7) for one specific case. FIG. 7 represents a typical case, and it has been found that the results are similar for other hub shapes. FIG. 6 illustrates a stress pattern 70 produced by stress reduction system 10 or 60. The stress pattern 70 shows different stress levels 72, 74, 75, 76 and 78, representing increasing levels of stress. FIG. 7 illustrates a stress pattern 80 on hub H produced by prior art bolts B. The stress pattern 80 shows different stress levels 82, 84, 85, 86 and 88 which represent increasing levels of stress. A comparison of the FIG. 6 and FIG. 7 stress levels, in percent (%) of the maximum stress level, is shown in Table 1 below.

**TABLE 1: Stress Levels**

| **% of Max Stress Level** | **FIG. 6** | **FIG. 7** **(Prior Art)** |
|---|---|---|
| 100 | | 88 |
| 90 | | 86 |
| 50 | 78 | |
| 45 | | 85 |
| 40 | 76 | |
| 20 | 75 | 84 |
| 15 | 74 | |
| 0 | 72 | 82 |

Of the three types of hub stress described in the Background section above, the stress diagrams of FIGS. 6 and 7 do not address the fatigue or cyclic stresses, only the mean tensile stress generated by tightening wheel nut L when mounting tire T on a vehicle. The prior art stress pattern of FIG. 7 shows regions of little or no stress in the barrel portion 82 of the generally bell-shaped hub H, and in pairs of triangular shaped regions extending from opposing sides of each bolt hole C. However, regions of extremely high stress 86 and 88 occurred tangentially along the inboard portion of each of bolt holes C. Transitional regions of stress 84 and 85 lie between the extremely high stress regions 86, 88 and the little or no stress regions 82.

FIG. 6 also has regions of little or no stress in the barrel portion of hub 12 and extending circumferentially between each of the bolt holes 14. The highest areas of stress 78 are pairs of small diamond shaped regions located on opposing sides of each hole 14 and lying in an annular band region encircling hub 12. Transitional regions of stress 74, 75 and 76 lie between stress regions 72 and 78. The highest levels of tensile stress 78 in stress reduction systems 10, 60 are roughly half of the highest stress levels 86, 88 experienced using a prior art hub H and bolt B design.

In addition to the significant reduction in the highest stress levels 78 experienced by the hub 12, the location of the highest stress levels is vastly improved using stress reduction systems 10, 60 over that of the prior art hub H and bolt B assembly of FIGS. 7 and 8. As discussed in the Background section above, the extremely high tensile stress 86, 88 occurs in a critical region of the hub H. This critical region is located along a curved transition between mounting flange D and the barrel portion of hub H, and at locations inboard from where material has been removed to form the holes C. The curved transition and the material removal each inherently weaken the hub in the critical region. The addition of placing a high tensile stress 86, 88 in this critical region, lying along the same radius as each hole C, results in a negative impact on the service life of hub H. The stress reduction systems 10, 60 move the highest stress regions 78 out of this critical region and away from any radius intersecting a hole 14 or the contoured seat 35.

One possible explanation for this repositioning of the highest stress regions 78 of systems 10, 60 from the critical region locations of the highest stress regions 86, 88 of the prior art shown in FIGS. 7 and 8 is illustrated in FIGS. 9A and 9B. FIG. 9A shows the resultant tensile stress as vector R imparted by the flat undersurface N and bolt head J in a radial direction.

FIG. 9B illustrates the effect of using a contoured seat 35 with a contoured contact surface 32 or 56, but for simplicity only system 10 is illustrated. Here, the contoured seat 35 is assumed to be in full contact with the bolt head contact surface 32 or 56. The total force imparted by bolt head 30 is represented by a vector 90 having a direction which is normal to, or perpendicular to, the contoured seat 32. Assuming the wheel nuts L in FIGS. 9A and 9B are each tightened with the same torque, the magnitude of the forces represented by vector S and vector 92 are equal, and thus, vectors S and 92 have the same length. Each head has an exposed surface which projects beyond said hub interior surface. As seen in FIG. 9B, each head seat has a first diameter at the interior surface and each head may have a second diameter greater than the first diameter wherein each head has an exposed surface which projects beyond said hub interior surface. Likewise, each of the holes 14 has a first circumference, and each seating surface 35 has a second circumference greater than the first circumference and each head contact surface 32 or 56 has a third circumference sized for a contact fit with said second circumference of said associated hub seating surface 35 when tightened by said wheel nut. In an alternative embodiment, the first diameter may be greater than the second diameter wherein the head has an exposed surface between the hub interior surface and hub exterior surface. In the alternative embodiment, the exposed surface is recessed below the hub interior surface.

Breaking down vector 90 into an x-y coordinate axis system, vector 90 has a vertical component shown as vector 92 and a horizontal component shown as vector 94. The terms "horizontal" and "vertical" are relative terms with respect to the view of FIG. 9B. These results were verified by the test data shown in FIGS. 6 and 7 for the maximum stress levels 78 and 86, 88, respectively. The horizontal stress vector 94 may impart a residual compressive stress in the critical region of hub 12. The horizontal stress vector 94 may also be responsible for moving the location of the highest stress levels 86, 88 in FIG. 7 to the location of the highest stress levels 78 in FIG. 6, which is out of a critical region.

Thus, the tensile stress reduction systems 10, 60 use a shape where the stud head 30, 50 is an angular design or taper that is seated in a countersunk hole 14, 35. This concept produces a lower tensile stress 78 in the critical region of the hub 12 because the forces from the stud mounting torque are directed normal to the connector contact surface 32, 56, instead of perpendicular to the prior art head undersurface N. This normal direction of the force indicated by vector 90 lowers the mean tensile force of the prior art system, indicated by the vector R, and may impart a residual compressive stress indicated by vector 94 in the critical region of hub 12. The shape of connector 20 has benefit as a monolithic one piece stud design. The two-piece assembled design 40 comprising stud 42 with captured washer 55 promotes full contact of contact surfaces 32, 56 with the contoured seat 32 at all times during tightening.

The present invention has been shown and described with reference to the foregoing exemplary embodiments. It is to be understood, however, that other forms, details, and embodiments may be made without departing from the scope of the invention which is defined in the following claims.

## Claims

1. A wheel hub stress reduction system (10) for retaining a wheel (W) on a vehicle using wheel nuts (L), comprising:
a hub (12) having a mounting portion (15) defining a plurality of holes (14) having a first circumference; and
a plurality of threaded connectors (40) each received by one of the holes (14);
wherein:
the hub mounting portion (15) comprises opposing interior and exterior surfaces (16,18) with the plurality of holes (14) extending therebetween; and
each threaded connector (40) comprises a head (50) retained at the hub interior surface (16) and a threaded portion (46) extending beyond the hub exterior surface (18) to engage said wheel nut (L);
the hub interior surface (16) defines a contoured seating surface (35) having a second circumference at the hub interior surface (16) which is greater than said first circumference, wherein the seating surface (35) gradually tapers in circumference between said first and second circumferences; and
each connector (40) comprises an elongate shank (42) having the head (50) formed at one end and a threaded portion (46) at an opposing end of the shank, with the shank (42) having a shoulder portion (44) adjacent to the head portion, with the shoulder portion outer surface having a plurality of serrations (45) formed thereon;
said serrations (45) forming a press fit with the hub holes (14) when inserted therein;
**characterised in that**:
each connector (40) comprises a spacer member (55) surrounding the shank (42) adjacent the head (50), an exposed surface of the spacer member (55) providing a contact surface (56) contoured to rest against an associated hub seating surface (35) when tightened by said wheel nut (L), wherein the contact surface (56) gradually tapers in circumference for a contact fit with said associated tapering hub seating surface (35) when tightened by said wheel nut (L), so as to produce a maximum tensile stress region in the hub (12) when the threaded connectors (40) are tensioned by a wheel nut (L) threadably engaged therewith, with the maximum tensile stress region lying beyond a hub radius which bisects said one of the holes (14).

2. A system (10) according to claim 1, wherein:
the spacer member (55) is adjacent an undersurface (52) of the head (50); and
said serrations (45) secure the spacer member (55) adjacent to the head undersurface (52).

3. A system according to claim 1, wherein:
the head seats (35) are each recessed from said interior surface (16) and surround an associated hole (14) of said plurality of holes (14); and
the plurality of connectors (40) each press fit into an associated hole (14) of said plurality of holes (14), each connector (40) having a threaded portion (46) extending beyond said exterior surface (18) to engage a wheel nut (L), and a contact surface (56) recessed below said interior surface (16), with the contact surface (56) resting against the head seat (35).

4. A system according to claim 1, wherein:
each hole (14) has a first circumference;
each associated head seat (35) has a second circumference greater than the first circumference; and
each spacer exposed contact surface (56) has a third circumference selected to mate with the head seat (35) at the second circumference.

5. A system according to claim 4, wherein:
each head seat (35) tapers in circumference between the first and second circumferences; and
each spacer exposed contact surface (56) comprises a tapered contact surface.

6. A system according to any of claims 3 to 5, wherein:
each head seat (35) comprises a frusto-conical recess tapering from said interior surface (16) toward said associated hole (14); and
each connector (40) contact surface (56) comprises a frusto-conical shape.

7. A system according to any of claims 3 to 6, wherein:
each head seat (35) has a first diameter at the interior surface (16); and
each head (50) has a second diameter greater than the first diameter.

8. A system according to any of claims 3 to 7, wherein:
each head (50) has an exposed surface between said hub interior surface (16) and said exterior surface (18).

9. A method of reducing stress on a wheel hub (12) retaining a wheel (W) on a vehicle using wheel nuts (L), comprising:
forming a plurality of holes (14) through a mounting portion (15) of the wheel hub (12), each of the plurality of holes (14) having a first circumference;
forming a contoured seating surface (35) for each associated hole (14), each seating surface (35) having a second circumference at the hub interior surface (16) which is greater than said first circumference and gradually tapering in circumference between said first and second circumferences; **characterized in that** said method further comprises the steps of
inserting one of a plurality of threaded connectors (40) through an associated hole (14) of said plurality of holes (14), each connector (40) including a spacer member (55) having a contact surface (56) gradually tapering in circumference for a contact fit with the seating surface (35) of said associated hole (14) when tightened by a wheel nut (L);
tensioning each inserted connector (40) with a wheel nut (L) threadably engaged therewith; and
seating the tapered contact surface (56) of each inserted connector (40) and spacer member (55) against the contoured seating surface (35) of said associated hole (14) so as to produce a maximum tensile stress region in the hub (12) after said tensioning, with the maximum tensile stress region lying beyond a hub radius which bisects said one of the holes (14).

10. A method of reducing stress according to claim 9, wherein said forming comprises:
forming each hole (14) with a first circumference through between interior and exterior surfaces (16, 18) of the hub of mounting portion (15); and
forming each contoured seating surface (35) adjacent said hub interior surface (16) with a second circumference greater than the first circumference and substantially concentric therewith.

11. A method of reducing stress according to claim 9, wherein:
each spacer member (55) has a generally right triangular shaped cross-section, comprising a first leg surface adjacent the shank, a second leg surface adjacent the head undersurface (52), and a hypotenuse surface forming the exterior contoured contact surface (56); and
said forming comprises contouring each seating surface (35) as a frusto-conical shape.

12. A method of reducing stress according to claim 11, wherein:
each spacer member (55) has a generally right triangular isosceles shaped cross-section; and
said forming comprises contouring each seating surface (35) as a right frusto-conical shape having an angle of about 45° between a conical surface and base of said shape.

13. A method of reducing stress according to any of claims 9 to 12, further comprising constructing the threaded connector (40), said constructing comprising:
providing a shank (42) having opposing first and second ends;
forming a head (50) at the shank first end;
threading a portion of the shank (42) adjacent the second end;
providing the shank (42) with a shoulder portion (44) adjacent the head (50);
mounting a spacer member (55) on the shank (42) adjacent the head (50); and
following said mounting, securing the spacer member (55) on the shank (42).

## Patentansprüche

1. Radnabenspannungsminderungssystem (10) zum Festhalten eines Rads (W) an einem Fahrzeug unter Verwendung von Radmuttern (L), umfassend:
eine Nabe (12) mit einem Befestigungsteil (15), der mehrere Löcher (14) definiert, die einen ersten Umfang aufweisen; und
mehrere Gewindeverbinder (40), die jeweils durch eines der Löcher (14) aufgenommen werden;
wobei:
der Nabenbefestigungsteil (15) eine Innen- und eine Außenfläche (16, 18) umfasst, die einander gegenüberliegen und mehrere sich dazwischen erstreckende Löcher (14) aufweisen; und
jeder Gewindeverbinder (40) einen Kopf (50), der an der Nabeninnenfläche (16) festgehalten wird, und einen mit einem Gewinde versehenen Teil (46), der sich über die Nabenaußenfläche (18) hinaus erstreckt, um die Radnabe (L) in Eingriff zu nehmen, umfasst;
die Nabeninnenfläche (16) eine konturierte Sitzfläche (35) definiert, die einen zweiten Umfang an der Nabeninnenfläche (16) aufweist, der größer ist als der erste Umfang, wobei sich der Umfang der Sitzfläche (35) zwischen dem ersten und dem zweiten Umfang allmählich verjüngt; und
jeder Verbinder (40) einen länglichen Schaft (42) umfasst, der den an einem Ende ausgebildeten Kopf (50) und einen mit einem Gewinde versehenen Teil (46) an einem gegenüberliegenden Ende des Schafts umfasst, wobei der Schaft (42) einen Schulterteil (44) neben dem Kopfteil aufweist, wobei die Außenfläche des Schulterteils mehrere daran ausgebildete Kerbverzahnungen (45) aufweist;
wobei die Kerbverzahnungen (45) eine Presspassung mit den Nabenlöchern (14) bei Einführung dort hinein bilden;
**dadurch gekennzeichnet, dass**
jeder Verbinder (40) ein Abstandselement (55) umfasst, das den Schaft (42) neben dem Kopf (50) umgibt, wobei eine freiliegende Fläche des Abstandselements (55) eine Kontaktfläche (56) bereitstellt, die konturiert ist, um bei Festziehen durch die Radmutter (L) an einer zugehörigen Nabensitzfläche (35) anzuliegen, wobei sich der Umfang der Kontaktfläche (56) bei Festziehen durch die Radmutter (L) für einen Kontaktsitz mit der zugehörigen sich verjüngenden Nabensitzfläche (35) allmählich verjüngt, um einen Bereich mit maximaler Zugspannung in der Nabe (12) zu erzeugen, wenn die Gewindeverbinder (40) durch eine Radmutter (L), die mit ihm in Gewindeeingriff steht, angezogen werden, wobei der Bereich mit maximaler Zugspannung hinter einem Nabenradius liegt, der das eine der Löcher (14) halbiert.

2. System nach Anspruch 1, wobei:
sich das Abstandselement (55) neben einer Unterseite (52) des Kopfs (50) befindet; und
die Kerbverzahnungen (45) das Abstandselement (55) neben der Kopfunterseite (52) befestigen.

3. System (10) nach Anspruch 1, wobei:
die Kopfsitze (35) jeweils von der Innenfläche (16) ausgespart sind und ein zugehöriges Loch (14) der mehreren Löcher (14) umgeben; und
die mehreren Verbinder (40) jeweils mit Presspassung in ein zugehöriges Loch (14) der mehreren Löcher (14) eingepasst sind, wobei jeder Verbinder (40) einen mit einem Gewinde versehenen Teil (46), der sich über die Außenfläche (18) hinaus erstreckt, um eine Radmutter (L) in Eingriff zu nehmen, und eine Kontaktfläche (56),
die unter der Innenfläche (16) ausgespart ist, aufweist, wobei die Kontaktfläche (56) an dem Kopfsitz (35) anliegt.

4. System nach Anspruch 1, wobei:
jedes Loch (14) einen ersten Umfang aufweist;
jeder zugehörige Kopfsitz (35) einen zweiten Umfang aufweist, der größer ist als der erste Umfang; und
jede freiliegende Abstandselementkontaktfläche (56) einen dritten Umfang aufweist, der zum Zusammenfügen mit dem Kopfsitz (35) am zweiten Umfang ausgewählt ist.

5. System nach Anspruch 4, wobei:
sich der Umfang jedes Kopfsitzes (35) zwischen dem ersten und dem zweiten Umfang verjüngt; und
jede freiliegende Abstandselementkontaktfläche (56) eine sich verjüngende Kontaktfläche aufweist.

6. System nach einem der Ansprüche 3 bis 5, wobei:
jeder Kopfsitz (35) eine kegelstumpfförmige Aussparung umfasst, die sich von der Innenfläche (16) zu dem zugehörigen Loch (14) verjüngt; und jede Kontaktfläche (56) des Verbinders (40) eine Kegelstumpfform umfasst.

7. System nach einem der Ansprüche 3 bis 6, wobei:
jeder Kopfsitz (35) einen ersten Durchmesser an der Innenfläche (16) aufweist; und
jeder Kopf (50) einen zweiten Durchmesser aufweist, der größer ist als der erste Durchmesser.

8. System nach einem der Ansprüche 3 bis 7, wobei:
jeder Kopf (50) eine freiliegende Fläche zwischen der Nabeninnenfläche (16) und der Außenfläche (18) aufweist.

9. Verfahren zur Minderung von Spannung an einer Radnabe (12), die unter Verwendung von Radmuttern (L) ein Rad (W) an einem Fahrzeug festhält, umfassend:
Ausbilden mehrerer Löcher (14) durch einen Befestigungsteil (15) der Radnabe (12), wobei jedes der mehreren Löcher (14) einen ersten Umfang aufweist;
Ausbilden einer konturierten Sitzfläche (35) für jedes zugehörige Loch (14), wobei jede Sitzfläche (35) einen zweiten Umfang an der Nabeninnenfläche (16) aufweist, der größer ist als der erste Umfang und sich zwischen dem ersten und dem zweiten Umfang allmählich verjüngt; **dadurch gekennzeichnet, dass** das Verfahren weiterhin die folgenden Schritte umfasst:
Einführen eines mehrerer Gewindeverbinder (40) durch ein zugehöriges Loch (14) der mehreren Löcher (14), wobei jeder Verbinder (40) ein Abstandselement (55) mit einer Kontaktfläche (56) enthält, deren Umfang sich für einen Kontaktsitz mit der Sitzfläche (35) des zugehörigen Lochs (14) beim Festziehen durch eine Radmutter (L) allmählich verjüngt;
Anziehen jedes eingeführten Verbinders (40) mit einer damit in Gewindeeingriff stehenden Radmutter (L);
Anordnen der sich verjüngenden Kontaktfläche (56) jedes eingeführten Verbinders (40) und des Abstandselements (44) an der konturierten Sitzfläche (35) des zugehörigen Lochs (14), um nach dem Anziehen einen Bereich mit maximaler Zugspannung in der Nabe (12) zu erzeugen, wobei der Bereich mit maximaler Zugspannung hinter einem Nabenradius liegt, der das eine der Löcher (14) halbiert.

10. Verfahren zur Minderung von Spannung nach Anspruch 9, wobei das Ausbilden Folgendes umfasst:
Ausbilden jedes Lochs (14) mit einem ersten Umfang zwischen der Innen- und Außenfläche (16, 18) der Nabe des Befestigungsteils (15); und
Ausbilden jeder konturierten Sitzfläche (35) neben der Nabeninnenfläche (16) mit einem zweiten Umfang, der größer ist als der erste Umfang und im Wesentlichen konzentrisch dazu verläuft.

11. Verfahren zur Minderung von Spannung nach Anspruch 9, wobei:
jedes Abstandselement (55) einen Querschnitt in Form eines allgemein rechtwinkligen Dreiecks aufweist, der eine erste Schenkelfläche neben dem Schaft, eine zweite Schenkelfläche neben der Kopfunterseite (52) und eine Hypotenusefläche, die die äußere konturierte Kontaktfläche (56) bildet, umfasst; und
das Ausbilden Konturieren jeder Sitzfläche (35) als eine Kegelstumpfform umfasst.

12. Verfahren zur Minderung von Spannung nach Anspruch 11, wobei:
jedes Abstandselement (55) einen Querschnitt in Form eines allgemein gleichschenkligen, rechtwinkligen Dreiecks aufweist; und
das Ausbilden Konturieren jeder Sitzfläche (35) als eine rechtwinklige Kegelstumpfform mit einem Winkel von ca. 45° zwischen einer konischen Fläche und einer Basis der Form umfasst.

13. Verfahren zur Minderung von Spannung nach einem der Ansprüche 9 bis 12, das weiterhin Konstruieren des Gewindeverbinders (40) umfasst, wobei das Konstruieren Folgendes umfasst:
Bereitstellen eines Schafts (42) mit einem ersten und einem zweiten Ende, die sich gegenüberliegen;
Ausbilden eines Kopfs (50) an dem ersten Ende des Schafts;
Versehen eines Teils des Schafts (42) neben dem zweiten Ende mit einem Gewinde;
Versehen des Schafts (42) mit einem Schulterteil (44) neben dem Kopf (50);
Anbringen eines Abstandselements (55) an dem Schaft (42) neben dem Kopf (50); und
nach dem Anbringen Befestigen des Abstandselements (55) an dem Schaft (42).

## Revendications

1. Système de réduction des contraintes de moyeu de roue (10) pour retenir une roue (W) sur un véhicule en utilisant des écrous de roue (L), comprenant :
un moyeu (12) ayant une portion de montage (15) définissant une pluralité de trous (14) ayant une première circonférence ; et
une pluralité de connecteurs filetés (40) reçus chacun par l'un des trous (14) ;
dans lequel :
la portion de montage de moyeu (15) comprend des surfaces intérieure et extérieure (16, 18), la pluralité de trous (14) s'étendant entre elles ; et
chaque connecteur fileté (40) comprend une tête (50) retenue au niveau de la surface intérieure du moyeu (16) et une portion filetée (46) s'étendant au-delà de la surface extérieure du moyeu (18) de manière à venir s'engager avec ledit écrou de roue (L) ;
la surface intérieure de moyeu (16) définissant une surface de siège profilée (35) ayant une deuxième circonférence au niveau de la surface intérieure du moyeu (16) qui est plus grande que ladite première circonférence, la circonférence de la surface de siège (35) diminuant graduellement de manière conique entre lesdites première et deuxième circonférences ; et
chaque connecteur (40) comprend une tige allongée (42) dont la tête (50) est formée à une extrémité et une portion filetée (46) à une extrémité opposée de la tige, la tige (42) ayant une portion d'épaulement (44) adjacente à la portion de tête, la surface externe de la portion d'épaulement ayant une pluralité de dentelures (45) formées sur celle-ci ;
lesdites dentelures (45) formant un ajustement serré avec les trous du moyeu (14) lorsqu'elles sont insérées dans ceux-ci ;
**caractérisé en ce que** :
chaque connecteur (40) comprend un organe d'espacement (55) entourant la tige (42) à côté de la tête (50), une surface exposée de l'organe d'espacement (55) fournissant une surface de contact (56) profilée de manière à être en contact avec une surface de siège associée (35) du moyeu lorsqu'elle est serrée par ledit écrou de roue (L), la circonférence de la surface de contact (56) diminuant graduellement de manière conique de manière à assurer un ajustement serré avec ladite surface de siège de moyeu associée (35) diminuant de manière conique lorsqu'elle est serrée par ledit écrou de roue (L), de manière à produire une région de contrainte de traction maximale dans le moyeu (12) lorsque les connecteurs filetés (40) sont serrés par un écrou de roue (L) engagé par filetage avec ceux-ci, la région de contrainte de traction maximale se situant au-delà d'un rayon de moyeu qui coupe ledit un des trous (14).

2. Système (10) selon la revendication 1, dans lequel
l'organe d'espacement (55) est adjacent à une surface inférieure (52) de la tête (50) ; et lesdites dentelures (45) fixent l'organe d'espacement (55) adjacent à la surface inférieure (52) de la tête.

3. Système selon la revendication 1, dans lequel :
les sièges (35) de la tête sont chacun renfoncés depuis ladite surface intérieure (16) et entourent un trou associé (14) de ladite pluralité de trous (14) ; et
la pluralité de connecteurs (40) sont chacun ajustés par serrage dans un trou associé (14) de ladite pluralité de trous (14), chaque connecteur (40) ayant une portion filetée (46) s'étendant au-delà de ladite surface extérieure (18) pour s'engager avec un écrou de roue (L), et une surface de contact (56) en retrait en dessous de ladite surface intérieure (16), la surface de contact (56) étant en contact avec le siège (35) de la tête.

4. Système selon la revendication 1, dans lequel :
chaque trou (14) a une première circonférence ;
chaque siège (35) de tête associé a une deuxième circonférence supérieure à la première circonférence ; et
chaque surface de contact (56) exposée de l'organe d'espacement a une troisième circonférence choisie de manière à s'accoupler avec le siège (35) de la tête au niveau de la deuxième circonférence.

5. Système selon la revendication 4, dans lequel :
chaque siège (35) de tête a une circonférence effilée entre les première et deuxième circonférences ; et
chaque surface de contact (56) exposée de l'organe d'espacement comprend une surface de contact de forme conique.

6. Système selon l'une quelconque des revendications 3 à 5, dans lequel :
chaque siège (35) de tête comprend un retrait tronconique diminuant de manière conique depuis ladite surface intérieure (16) vers ledit trou associé (14) ; et
chaque surface de contact (56) de connecteur (40) comprend une forme tronconique.

7. Système selon l'une quelconque des revendications 3 à 6, dans lequel :
chaque siège (35) de tête a un premier diamètre au niveau de la surface intérieure (16) ; et
chaque tête (50) a un deuxième diamètre supérieur au premier diamètre.

8. Système selon l'une quelconque des revendications 3 à 7, dans lequel :
chaque tête (50) a une surface exposée entre ladite surface intérieure (16) de moyeu et ladite surface extérieure (18).

9. Procédé pour réduire les contraintes sur un moyeu de roue (12) retenant une roue (W) sur un véhicule en utilisant des écrous de roue (L), comprenant les étapes suivantes :
former une pluralité de trous (14) à travers une portion de montage (15) du moyeu de roue (12),
chacun de la pluralité de trous (14) ayant une première circonférence ;
former une surface de siège profilée (35) pour chaque trou associé (14), chaque surface de siège (35) ayant une deuxième circonférence au niveau de la surface intérieure (16) du moyeu qui est supérieure à ladite première circonférence et sa circonférence diminuant graduellement de manière conique entre lesdites première et deuxième circonférences ; **caractérisé en ce que** ledit procédé comprend en outre les étapes suivantes :
insérer l'un d'une pluralité de connecteurs filetés (40) à travers un trou associé (14) de ladite pluralité de trous (14), chaque connecteur (40) comportant un organe d'espacement (55) ayant une surface de contact (56) dont la circonférence diminue graduellement de manière conique en vue d'un ajustement de contact avec la surface de siège (35) dudit trou associé (14) lorsqu'il est serré par un écrou de roue (L) ;
serrer chaque connecteur inséré (40) avec un écrou de roue (L) engagé par filetage avec lui ; et
placer la surface de contact conique (56) de chaque connecteur inséré (40) et de chaque organe d'espacement (55) contre la surface de siège profilée (35) dudit trou associé (14) de manière à produire une région de contrainte de traction maximale dans le moyeu (12) après ledit serrage, la région de contrainte de traction maximale étant située au-delà d'un rayon du moyeu qui coupe ledit un des trous (14).

10. Procédé pour réduire les contraintes selon la revendication 9, dans lequel ladite étape de formage inclut les étapes suivantes :
former chaque trou (14) avec une première circonférence à travers et entre les surfaces intérieure et extérieure (16, 18) du moyeu de la portion de montage (15) ; et
former chaque surface de siège profilée (35) adjacente à ladite surface intérieure (16) du moyeu avec une deuxième circonférence supérieure à la première circonférence et de manière substantiellement concentrique à celle-ci.

11. Procédé pour réduire les contraintes selon la revendication 9, dans lequel :
chaque organe d'espacement (55) a une section transversale généralement en forme de triangle rectangle comprenant une première surface de côté adjacente à la tige, une deuxième surface de côté adjacente à la surface inférieure (52) de la tête,
et une surface d'hypoténuse formant la surface de contact extérieure profilée (56) ; et
ladite étape de formage comprend le profilage de chaque surface de siège (35) sous forme tronconique.

12. Procédé pour réduire les contraintes selon la revendication 11, dans lequel :
chaque organe d'espacement (55) a une section transversale généralement en forme de triangle rectangle isocèle ; et
ladite étape de formage comprend le profilage de chaque surface de siège (35) sous forme tronconique droite ayant un angle d'environ 45° entre une surface conique et une base de ladite forme.

13. Procédé pour réduire les contraintes selon l'une quelconque des revendications 9 à 12, comprenant en outre l'étape consistant à construire le connecteur fileté (40), ladite construction comprenant les étapes suivantes :
fournir une tige (42) ayant des première et deuxième extrémités opposées ;
former une tête (50) au niveau de la première extrémité de la tige ;
fileter une portion de la tige (42) adjacente à la deuxième extrémité ;
munir la tige (42) d'une portion d'épaulement (44) adjacente à la tête (50) ;
monter un organe d'espacement (55) sur la tige (42) à côté de la tête (50) ; et
suite audit montage, fixer l'organe d'espacement (55) sur la tige (42).
